# DEMANDE DE BREVET EUROPEEN

(11) **EP 1 538 545 A1**
(43) Date de publication de la demande: **08.06.2005**
(21) Numéro de dépôt: 04292787.1
(22) Date de dépôt: 26.11.2004
(51) Int. Cl.: G06F 17/60

(54) **Système de messagerie électronique et procédé d'émission de messages électroniques correspondant**

(30) Priorité: 03.12.2003 FR 0314178
(71) Demandeur: FRANCE TELECOM, 75015 Paris (FR)
(72) Inventeur: Villain, Eric, 38400 Saint Martin D'Heres (FR); Prola, Alain, 38100 Grenoble (FR); Tran Xuan, Fabrice, 38320 Eybens (FR)
(74) Mandataire: Casalonga, Axel

(57) **Abrégé**

Ce procédé d'émission de messages électroniques par l'intermédiaire d'un système de messagerie comprend les étapes de réception par le serveur (26) de groupe de messagerie d'un message émis à partir d'un terminal d'un utilisateur distant et de transmission dudit message par le serveur (26) de groupe de messagerie aux terminaux d'utilisateurs d'un groupe d'utilisateurs prédéterminés en fonction de règles de transmission prédéterminées par l'utilisateur à l'initiative duquel le groupe d'utilisateurs est créé.

## Description

L'invention concerne l'élaboration et la transmission de messages électroniques et concerne plus particulièrement un procédé et un système de messagerie électronique utilisables pour l'élaboration et la transmission de messages électroniques entre plusieurs intervenants.

L'utilisation croissante de la messagerie électronique, en particulier dans un environnement inter-entreprises, engendre, pour chaque utilisateur, une prolifération des courriers reçus dont la gestion est difficile à réaliser pour les utilisateurs.

Ce problème se pose de manière accrue lorsque des courriers électroniques sont échangés entre plusieurs intervenants et que chaque utilisateur souhaite faire part de ses remarques aux autres intervenants, mais également être tenu informé de l'intervention des autres participants. En effet, les services de messagerie électronique proposent une fonction appelée « répondre à tous » qui, lorsqu'elle est utilisée, engendre un grand nombre de messages électroniques.

Le but de l'invention est donc de pallier cet inconvénient et de fournir un système et un procédé de messagerie électronique permettant de fournir une gestion des messages, et ce à la source, c'est-à-dire avant leur diffusion, afin de limiter le nombre de courriers électroniques à acheminer.

Selon l'invention, il est donc proposé, selon un premier objet, un système de messagerie électronique comprenant un ensemble de serveurs d'émission et de réception de messages électroniques reliés en réseau pour l'émission et la réception de messages et avec lesquels communiquent des équipements informatiques d'utilisateurs distants.

Selon une caractéristique générale de ce système, l'invention comporte en outre un serveur de groupe de messagerie par l'intermédiaire duquel transitent les messages entre les serveurs d'émission et de réception, ledit serveur de groupe de messagerie organisant et distribuant les messages entre un groupe d'utilisateurs prédéterminés en fonction de règles de transmission prédéterminées par un utilisateur à l'initiative duquel le groupe d'utilisateurs est créé.

Ainsi, les contributeurs et l'initiateur ne répondent pas à tous les participants mais seulement au serveur de groupe qui organise les réponses et les distribue suivant les règles indiquées par l'initiateur.

Grâce à l'élaboration d'un groupe d'intervenants limité et à la gestion, à la source, du contenu et de l'envoi des messages, il est possible de limiter de manière considérable le nombre de courriers électroniques sans restreindre la quantité d'informations transmises. En effet, grâce à l'organisation des messages, il est possible d'éviter toutes redondances tout en maintenant une cohérence temporelle des messages. En outre, la gestion des courriers s'effectuant de manière centralisée par un serveur de groupe, l'invention peut être aisément intégrée dans des architectures de messagerie électronique préexistantes.

Selon une autre caractéristique de l'invention, le serveur de groupe de messagerie comporte des moyens de contrôle de l'identité de chaque utilisateur du groupe de messagerie.

Dans un mode de réalisation, ces moyens de contrôle comportent un module de génération de clés de chiffrement destinées à être respectivement transmises aux utilisateurs du groupe dans un message d'ouverture de session de messagerie et à être insérées dans des messages émis par ces utilisateurs pour contrôler leur identité.

Ces moyens de contrôle peuvent en outre comporter des moyens d'élaboration d'un authentifiant d'un utilisateur à l'initiative duquel le groupe d'utilisateurs est créé pour son authentification au cours de l'élaboration de la session de messagerie.

Selon une autre caractéristique de l'invention, le système comporte en outre une base de données pour le stockage des messages et des paramètres de chaque session de messagerie.

Afin de gérer les messages, le système comporte en outre un module de gestion apte à interroger périodiquement la base de données pour surveiller l'évolution de la session de messagerie et programmer l'émission de messages électroniques lorsqu'un ou plusieurs critères prédéterminés sont remplis et un module de mise en forme de message piloté par le module de gestion pour élaborer un message à destination des utilisateurs du groupe en fonction desdites règles de transmission.

Selon un autre objet, il est proposé un procédé d'émission de messages électroniques par l'intermédiaire d'un système de messagerie tel que défini ci-dessus, caractérisé en ce qu'il comprend les étapes d'émission d'un message à partir d'un terminal d'un utilisateur distant, de réception du message par le serveur de groupe de messagerie et de transmission dudit message par le serveur de groupe de messagerie aux terminaux d'utilisateurs d'un groupe d'utilisateurs prédéterminés en fonction de règles de transmission prédéterminées par l'utilisateur à l'initiative duquel le groupe d'utilisateurs est créé.

Selon une autre caractéristique du procédé selon l'invention, une phase préalable de configuration d'une session de messagerie est prévue. Cette phase comporte les étapes de transmission, par le serveur de groupe, au terminal de l'utilisateur à l'initiative duquel le groupe d'utilisateurs est créé, d'un formulaire de configuration de la session, de remplissage du formulaire de manière à spécifier les adresses électroniques des utilisateurs du groupe d'utilisateurs, des droits d'accès de chaque utilisateur et des informations complémentaires relatives au déroulement de la session, d'envoi du formulaire rempli à destination du serveur de groupe, de calcul d'un authentifiant pour chaque utilisateur du groupe, de stockage des informations contenues dans le formulaire dans une base de données et d'envoi d'un courrier électronique d'ouverture de session à chaque utilisateur du groupe, ledit courrier contenant des informations extraites du formulaire et l'authentifiant de l'utilisateur.

Avantageusement, en cours de session, on interroge périodiquement la base de données pour surveiller l'évolution de la session, on établit un rapport de session pour chaque utilisateur du groupe d'utilisateurs en fonction de critères d'établissement prédéterminés et l'on transmet le rapport à chaque utilisateur, ledit rapport contenant les messages reçus en provenance d'une partie au moins des terminaux d'utilisateurs du groupe.

D'autres buts, caractéristiques et avantages de l'invention apparaîtront à la lecture de la description suivante, donnée uniquement à titre d'exemple non limitatif, et faite en référence aux dessins annexés, sur lesquels :
- la figure 1 est un schéma synoptique illustrant l'architecture générale d'un système de messagerie électronique conforme à l'invention ;
- la figure 2 est un schéma synoptique détaillant l'architecture du serveur de groupe du système de messagerie de la figure 1 ; et
- la figure 3 est un organigramme illustrant le fonctionnement du système de la figure 1.

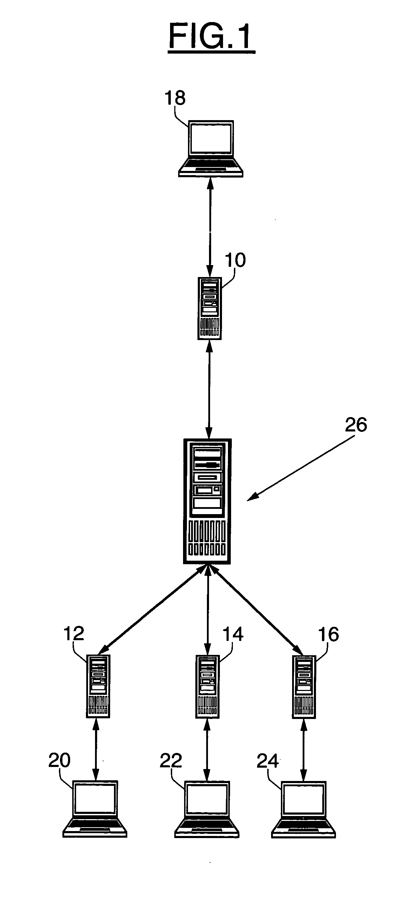

En référence à la figure 1, un système de messagerie électronique conforme à l'invention comporte un ensemble de serveurs d'émission et de réception de messages, tels que 10, 12, 14 et 16, raccordés en réseau. Ces serveurs de messagerie peuvent être constitués par tous types de serveurs d'émission et de réception appropriés, tels que des serveurs POP (« Post Office Protocol ») ou IMAP (« Internet Mail Access Protocol »), qui permettent chacun d'émettre un message électronique vers un serveur de messagerie distant et de restituer à l'utilisateur les messages reçus. On voit eb effet sur cette figure 1 que ces serveurs de messagerie 10, 12, 14 et 16 communiquent avec des équipements informatiques d'utilisateur distant 18, 20, 22 et 24, constitués par des micro-ordinateurs conventionnels.

Conformément à une caractéristique de l'invention, le réseau illustré sur cette figure 1 est pourvu d'un serveur de groupe de messagerie 26 en communication avec l'ensemble des serveurs d'émission et de réception 10, 12, 14 et 16 pour gérer les communications entre ces derniers.

Plus particulièrement, le serveur du groupe de messagerie 26 est utilisé pour créer, au sein du réseau, un groupe restreint de participants, à l'initiative de l'un des utilisateurs, par exemple l'utilisateur référencé 18, pour gérer les communications entre les utilisateurs de ce groupe et organiser les messages entre ces utilisateurs.

Comme cela sera décrit en détail par la suite, ce serveur 26 du groupe de messagerie est programmable à distance pour définir les utilisateurs du groupe et les droits d'accès de chaque utilisateur. Il est également configurable de manière à programmer l'émission de rapports de session lorsqu'un ou plusieurs critères prédéterminés sont remplis et diffuser ces rapports à l'ensemble des participants, et ce, en fonction des règles de transmission spécifiées pour chaque utilisateur définissant notamment leurs droits d'accès.

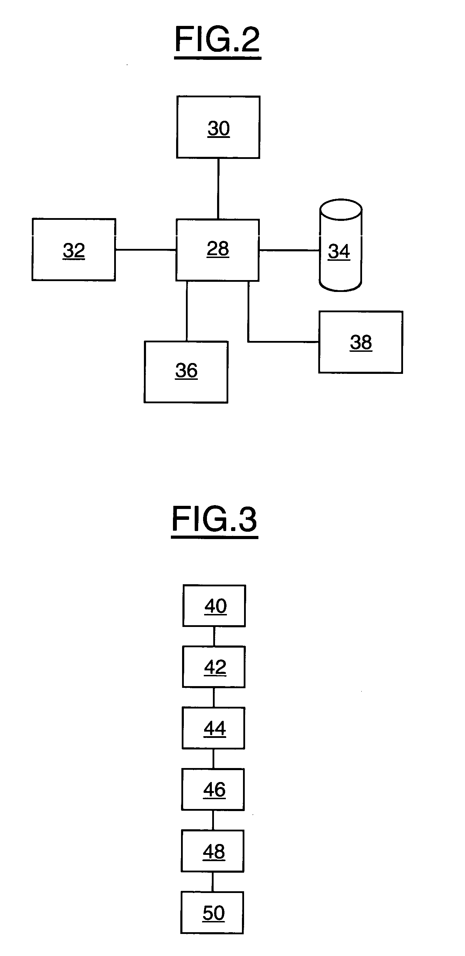

Comme on le voit sur la figure 2, le serveur 26 est organisé autour d'une unité centrale de traitement 28 et comporte un serveur de messagerie 30 proprement dit servant à l'émission et à la réception de messages à destination des serveurs de messagerie 10, 12, 14 et 16 du système. L'unité centrale de traitement 28 est également associée à un module de chiffrement 32 servant à l'élaboration de clés de chiffrement pour contrôler l'identité de chaque utilisateur.

Une base de données 34 est utilisée pour le stockage de l'ensemble des paramètres de chaque session de messagerie programmée par l'utilisateur 18 à l'initiative duquel le groupe de messagerie est formé.

Par ailleurs, un module de gestion 36 surveille périodiquement l'évolution d'une session de messagerie en cours d'exécution, de manière, notamment, à détecter le remplissage d'un ou de plusieurs critères prédéterminés.

Enfin, un module 38 d'élaboration de rapports de session est raccordé à l'unité centrale 28. Ce module 38 est utilisé pour élaborer les rapports de session en fonction des informations relatives aux participants, extraites de la base de données 34, et d'informations complémentaires relatives au déroulement de la session et spécifiant le contenu du rapport.

En référence à la figure 3, le système qui vient d'être décrit fonctionne de la façon suivante. Comme précédemment, on considèrera dans la suite de la description que la création de la session est effectuée à l'initiative de l'équipement informatique référencé 18. La première phase de création du groupe d'utilisateurs restreint débute par l'émission d'un courrier électronique standard au serveur de groupe de messagerie 26. Comme on le conçoit, ce message est routé vers ce serveur 26 par l'intermédiaire du serveur de messagerie 10. Ce message est réceptionné, au sein du serveur de groupe 26, par le serveur de messagerie 30 proprement dit. L'unité centrale 28, qui interroge régulièrement la messagerie, détecte alors les mails sans information spécifique. De tels mails sont identifiés comme étant des demandes d'ouverture de session (étape 40).

Lors de l'étape 42 suivante, un authentifiant est calculé par l'unité centrale 28 à partir du libellé de l'adresse électronique de l'émetteur extraite du courrier électronique reçu et d'un numéro de session. Un formulaire de configuration de session est alors transmis à l'utilisateur demandeur, conjointement avec l'authentifiant. Ce formulaire de configuration se présente par exemple sous la forme d'une interface comprenant un ensemble de champs destinés à être saisis par l'utilisateur pour spécifier l'ensemble des adresses électroniques des utilisateurs du groupe à former, les droits d'accès de chacun, tels que droits de consultation, droits de réponse, ..., les critères d'élaboration des rapports de session, ainsi que les paramètres de présentation des messages dans ce rapport. Le formulaire contient également une information complémentaire relative au contenu de la session, sous la forme d'un intitulé de session, d'une description d'un sujet à débattre entre les membres du groupe, d'une durée maximale prévue pour la session, ...

Après réception du formulaire par le serveur de groupe 26, les informations de session sont inscrites dans la base de données 34 (étape 44). Des authentifiants sont alors calculés pour chaque participant, à partir du libellé de l'adresse électronique de chaque participant et du numéro de session. Ces authentifiants ne sont dès lors valables que pour une seule session.

Lors de l'étape 46 suivante, le serveur de groupe 26 génère un message d'ouverture de session pour chaque participant. Ce message indique l'ouverture de la session avec l'intitulé et la description du sujet à débattre, ainsi que la durée de la session. Une pièce jointe, qui contient une clé cryptée délivrée par le module de chiffrement 32, est associée à ce message d'ouverture afin de permettre d'identifier sans ambiguïté chaque utilisateur et la session à laquelle il appartient, lorsque celui-ci répondra à ce message d'ouverture.

Lors de l'étape 48 suivante, des courriers électroniques sont alors échangés librement entre les utilisateurs. On notera toutefois que les réponses sont centralisées par le serveur de groupe 26 et sont triées et stockées dans la base de données 34. En cours de session, le module de gestion 36 interroge périodiquement la base de données pour prendre en compte les paramètres des sessions nouvellement créés, et surveille en même temps l'évolution de l'arrivée des messages. Lorsqu'un critère prédéterminé est rempli, consistant par exemple en une réponse de l'ensemble des participants ou sur réception d'un courrier de commande spécifique provenant de l'utilisateur, ou encore à l'expiration d'une période de temps prédéterminée, le module de gestion 36 sollicite le module 38 d'élaboration de rapport de session (étape 48). Ce module 38 récupère alors les informations relatives aux participants et génère le rapport en fonction des choix exprimés lors de l'inscription, qui portent sur l'élaboration de ce rapport, afin de faire correspondre la présentation des messages reçus en fonction des critères spécifiés par l'utilisateur à l'initiative duquel le groupe est formé. Ainsi, par exemple, les messages peuvent être triés par date, par émetteur. Il est également possible de prévoir d'émettre un résultat final correspondant au dernier courrier électronique reçu. Après élaboration, les rapports de session sont envoyés à l'ensemble des participants (étape 50).

Parallèlement, au cours de cette étape 50, le module de gestion 36, qui surveille l'évolution de la session, surveille l'apparition d'un critère prédéterminé à partir duquel il est décidé que la session doit prendre fin. Par exemple, ce critère correspond à la réception d'un courrier particulier, au résultat d'un vote des participants, ou à l'expiration de la durée prévue de la session. Lorsqu'un tel critère est rempli, le module 38 procède à l'élaboration d'un rapport final afin de transmettre à chaque utilisateur du groupe la décision finale de l'ensemble des membres.

## Revendications

1. Procédé d'émission de messages électroniques par l'intermédiaire d'un système de messagerie comprenant au moins un serveur (26) de groupe de messagerie, **caractérisé en ce qu'**il comprend les étapes de réception par le serveur (26) de groupe de messagerie d'un message émis à partir d'un terminal d'un utilisateur distant et de transmission dudit message par le serveur (26) de groupe de messagerie aux terminaux d'utilisateurs d'un groupe d'utilisateurs prédéterminés en fonction de règles de transmission prédéterminées par l'utilisateur à l'initiative duquel le groupe d'utilisateurs est créé.

2. Procédé selon la revendication précédente, comprenant en outre l'étape préalable de configuration d'une session de messagerie, et les étapes de transmission, par le serveur (26) de groupe, au terminal de l'utilisateur à l'initiative duquel le groupe d'utilisateurs est créé, d'un formulaire de configuration de la session, de réception par le serveur (26) de groupe du formulaire rempli de manière à spécifier des adresses électroniques des utilisateurs du groupe d'utilisateurs, et de stockage des informations contenues dans le formulaire dans une base de données.

3. Procédé selon la revendication précédente, **caractérisé en ce qu'**en cours de session, le serveur (26) de groupe de messagerie interroge périodiquement la base de données (34) pour surveiller l'évolution de la session, établit un rapport de session pour chaque utilisateur du groupe d'utilisateurs en fonction de critères d'établissement prédéterminés et transmet le rapport à chaque utilisateur, ledit rapport contenant les messages reçus en provenance d'une partie au moins des terminaux d'utilisateurs du groupe.

4. Système de messagerie électronique, comprenant un ensemble de serveurs (10, 12, 14, 16) d'émission et de réception de messages électroniques reliés en réseau pour l'émission et la réception de messages et avec lesquels communiquent des équipements informatiques (18, 20, 22, 24) d'utilisateurs distants, **caractérisé en ce qu'**il comporte en outre un serveur (26) de groupe de messagerie par l'intermédiaire duquel transitent les messages entre les serveurs d'émission et de réception, ledit serveur (26) de groupe de messagerie organisant et distribuant les messages entre un groupe d'utilisateurs prédéterminés en fonction de règles de transmission prédéterminées par un utilisateur à l'initiative duquel le groupe d'utilisateurs est créé.

5. Système de messagerie selon la revendication précédente, **caractérisé en ce que** le serveur de groupe de messagerie comporte des moyens de contrôle de l'identité de chaque utilisateur du groupe de messagerie.

6. Système de messagerie selon la revendication précédente, **caractérisé en ce que** lesdits moyens de contrôle comportent un module (32) de génération de clés de chiffrement destinées à être respectivement transmises aux utilisateurs du groupe dans un message d'ouverture de session de messagerie et à être insérées dans des messages émis par ces utilisateurs pour contrôler leur identité.

7. Système selon l'une des revendications 5 et 6, **caractérisé en ce que** lesdits moyens de contrôle comportent des moyens (28) d'élaboration d'un authentifiant de l'utilisateur à l'initiative duquel le groupe d'utilisateurs est créé pour son authentification au cours de l'élaboration de la session de messagerie.

8. Système de messagerie selon l'une quelconque des revendications 4 à 7, **caractérisé en ce qu'**il comporte une base de données (34) pour le stockage des messages et des paramètres de chaque session de messagerie.

9. Système selon la revendication précédente, **caractérisé en ce qu'**il comprend en outre un module de gestion (36) apte à interroger périodiquement la base de données pour surveiller l'évolution de la session de messagerie et programmer l'émission de messages électroniques lors qu'un ou plusieurs critères prédéterminés sont remplis et un module (38) de mise en forme de messages piloté par le module de gestion pour élaborer un message à destination des utilisateurs du groupe en fonction desdites règles de transmission.

10. Serveur (26) de groupe de messagerie, **caractérisé en ce qu'**il comprend une unité centrale de traitement (28), un module (30) de messagerie pour recevoir des messages provenant d'autres serveurs de messagerie (10, 12, 14, 16), une base (34) de données pour le stockage de paramètres de sessions de messagerie programmables à distance, un module (36) de gestion de l'évolution d'une session de messagerie en liaison avec la base (34) de données et le module (30) de messagerie.

11. Un produit programme d'ordinateur chargeable directement dans une mémoire interne d'un serveur (26) de groupe de messagerie, comprenant des portions de code logiciel pour l'exécution des étapes d'un procédé selon l'une des revendications 1 à 3, lorsque le programme est exécuté sur le serveur (26) de messagerie.

12. Support utilisable dans un serveur (26) de groupe de messagerie et sur lequel est enregistré un produit programme d'ordinateur chargeable directement dans une mémoire interne du serveur (26) de messagerie, comprenant des portions de code logiciel pour l'exécution des étapes d'un procédé selon l'une des revendications 1 à 3, lorsque le programme est exécuté sur le serveur (26) de groupe de messagerie.
